# EUROPEAN PATENT SPECIFICATION

(11) **EP 2 325 037 B1**
(45) Date of publication and mention of the grant of the patent: **28.02.2018**
(21) Application number: 09813151.9
(22) Date of filing: 11.09.2009
(51) Int. Cl.: B60L 11/18, H02J 7/00, H02J 50/80

(54) **WIRELESS CHARGING SYSTEM FOR VEHICLES**
DRAHTLOSES LADESYSTEM FÜR FAHRZEUGE
SYSTÈME DE CHARGE SANS FIL POUR VÉHICULES

(30) Priority: 11.09.2008 JP 2008232874
(43) Date of publication of application: 25.05.2011
(73) Proprietor: Yazaki Corporation, Minato-ku Tokyo 108-8333 (JP)
(72) Inventor: HIRAYAMA, Makoto, Shizuoka (JP)
(74) Representative: Grünecker Patent- und Rechtsanwälte PartG mbB
(86) International application number: PCT/JP2009/065952
(87) International publication number: WO 2010/030005

(56) References cited:
- JP-A- 2 078 347
- JP-A- 6 245 326
- JP-A- H0 278 347
- JP-A- 2004 289 953
- JP-T- 2002 511 972
- US-A- 4 496 896
- US-A- 4 941 201
- US-A- 5 621 913

## Description

### <Technical Field>

The present invention relates to a wireless charging system for a vehicle which transmits, in a non-contact manner, electric power outputted from a feeding apparatus to a battery mounted on a vehicle and, in particular, relates to a technique of communicating between the feeding apparatus and the vehicle in a manner of superimposing a control signal on an electric power signal transmitted to the vehicle from the feeding apparatus.

### <Background Technique>

Document JP-H02-78347 A describes a transmission means for wirelessly sending power and information to at least one of on-ground equipment or on-vehicle equipment in the same transmission wave. Information available at the on-vehicle equipment is modulated by an ASK modem on the transmission wave by varying the amplitude thereof.

As a charging system for charging electric power to the battery of an electric car, there is known one which is disclosed in JP-A-2006-74868 for example. Since the charging system described in the patent document 1 is configured in a manner that a non-contact type charging system based on electromagnetic induction is employed to supply electric power for charging the battery to the vehicle in a non-contact manner to thereby charge the battery. Thus, the battery can be charged easily without requiring such an operation of plug connection.

Further, according to such the charging system, it is necessary to transmit and receive, between a feeding side apparatus and the vehicle, various kinds of control signals representing information of the remaining capacity of the battery, possible/impossible as to the charging, emergency stop due to the occurrence of abnormality, for example. Such the communication is performed by using a communication apparatus provided separately. JP-H06-245326 which is considered to represent the closest prior art discloses a wireless charging system for a vehicle. An information signal is modulated onto the power signal and transmitted to the vehicle.

### <Disclosure of the Invention>

### <Problems that the Invention is to Solve>

As described above, according to the wireless charging system for a vehicle of the related art, it is necessary to provide a communication section at each of the feeding side apparatus and the vehicle in order to transmit and receive the control signal between the feeding side apparatus and the vehicle. Thus, there arises a problem that the configuration of the system is complicated and grown in size.

The invention is made in order to solve the aforesaid problem of the related art and an object of the invention is to provide a wireless charging system for a vehicle which transmits and receives a control signal by superimposing the control signal on an electric power signal transmitted to a vehicle from a feeding apparatus to thereby simplify the configuration of the system.

### <Means for Solving the Problems>

This is achieved by the features of claim 1. Further features and advantages of the present invention are the subject matter of dependent claims.

### <Effects of the Invention>

According to the wireless charging system for a vehicle according to the invention, the AC power outputted from the electric power output section is amplified and further the AC power thus amplified is transmitted to the vehicle side by using the resonant power transmission method to thereby charge the battery. Thus, since the battery can be charged without coupling the feeding apparatus and the vehicle via a plug etc., the charging operation can be performed easily.

Further, since the control signal to be transmitted from the feeing apparatus to the vehicle can be superimposed on the AC power and transmitted, the control signal can be transmitted between the feeing apparatus and the vehicle. Thus, since the communication can be performed between the feeding apparatus and the vehicle without separately providing a communication apparatus, the system can be miniaturized and simplified, which contributes to the light-weighting of the weight of the vehicle body.

### <Brief Description of the Drawings>

Fig. 1 is an explanatory diagram showing the electric car and the feeding apparatus of a wireless charging system for a vehicle.
Fig. 2 is a block diagram showing the electrical configuration of the feeding apparatus and the charging apparatus of the wireless charging system for a vehicle.
Fig. 3 is a block diagram showing the electrical configuration of the feeding apparatus and the charging apparatus of the wireless charging system for a.
Fig. 4 is timing charts showing signal waveforms at the respective points of the wireless charging system for a vehicle shown in Fig. 3.
Fig. 5 is an explanatory diagram showing the electric car and the feeding apparatus of a wireless charging system for a vehicle.
Fig. 6 is a block diagram showing the electrical configuration of the feeding apparatus and the charging apparatus of the wireless charging system for a vehicle.
Fig. 7 is a block diagram showing the electrical configuration of the feeding apparatus and the charging apparatus of the wireless charging system for a vehicle.
Fig. 8 is a block diagram showing the electrical configuration of the feeding apparatus and the charging apparatus of the wireless charging system for a vehicle.
Fig. 9 is an explanatory diagram showing the principle of the resonant power transmission method.

### <Modes for Carrying Out the Invention>

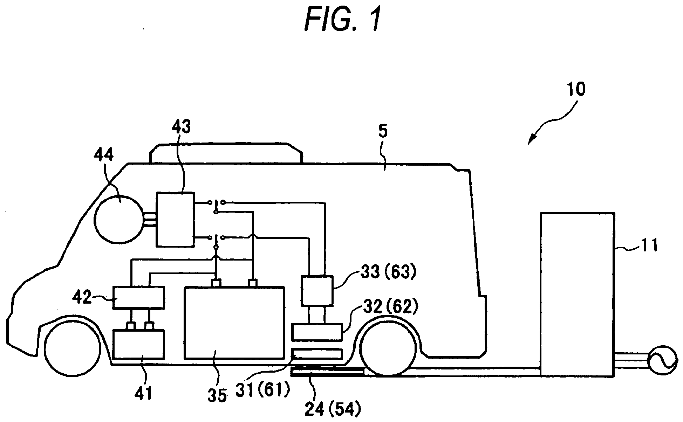

Hereinafter, embodiments according to the invention will be explained with reference to drawings. Fig. 1 is a diagram for explaining the configuration of a wireless charging system for a vehicle. As shown in this figure, the wireless charging system 10 for a vehicle according to each of these embodiments includes an electric car 5 (vehicle) and a feeding apparatus 11 for feeding electric power to the electric car 5, whereby electric power outputted from the feeding apparatus 11 is transmitted to the electric car 5 in a non-contact manner.

The feeding apparatus 11 includes a first resonance coil 24. When AC power is supplied to the first resonance coil 24, the AC power is transmitted to a second resonance coil (second communication terminal) 31 provided at the electric car 5.

The electric car 5 includes a second resonance coil 31 which approximates to the first resonance coil 24 when a vehicle is located at the predetermined position of the feeding apparatus 11 at the time of charging, a coupling distributor (distributing section) 32 and a rectifier (rectifying section) 33. Further, the electric car includes a battery 35 for charging DC power, a DC/DC converter 42 which steps down the voltage of the battery 35 and supplies to a sub-battery 41, an inverter 43 for converting the output power of the battery 35 into AC power, and a vehicle driving motor 44 driven by the AC power outputted from the inverter 43.

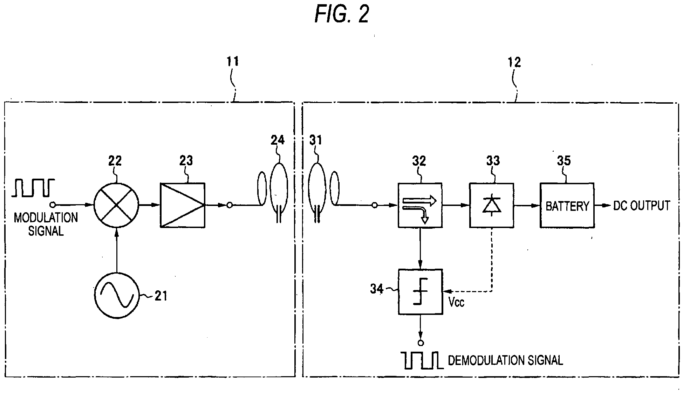

Fig. 2 is a block diagram showing the configuration of the wireless charging system for a vehicle. As shown in this figure, the electric car 5 includes a charging apparatus 12. The charging apparatus 12 is supplied with electric power from the feeding apparatus 11 to thereby charge the battery 35.

The feeding apparatus 11 includes a carrier oscillator (electric power output section) 21 for outputting an AC power of a predetermined frequency, an ASK modulator (modulation section) 22 for superimposing a control signal on the AC power outputted from the carrier oscillator 21 according to a modulation method such as the ASK modulation, a power amplifier (electric power amplifying section) 23 for amplifying the AC power modulated by the ASK modulator, and a first resonance coil (communication terminal) 24 for outputting the AC power amplified by the power amplifier 23.

The carrier oscillator 21 outputs the AC power having the frequency in a range of 1 to 100 [MHz], for example, as an AC signal for power transmission.

The ASK modulator 22 modulates the AC power as a carrier signal according to the ASK (Amplitude Shift Keying) method. As is well known, the ASK is a modulation method which modulates the carrier signal (AC power) in a manner of representing digital data as variations in the amplitude of a sinusoidal wave. Although this embodiment is explained as to a case where the ASK method is employed as the modulation method, one of the modulation methods such as AM (Amplitude Modulation), FM (Frequency Modulation), FSK (Frequency Shift Keying), PSK (Phase Shift Keying), OFDM (Orthogonal frequency division multiplex) and SS (Spread Spectrum) may be applied.

The power amplifier 23 amplifies the AC power outputted from the ASK modulator 22 and outputs the amplified AC power to the first resonance coil 24. The first resonance coil 24 transmits the AC power to the second resonance coil 31 in a non-contact manner by the resonant power transmission method in cooperation with the second resonance coil 31 provided at the charging apparatus 12. The resonant power transmission method will be explained in detail later.

Further, the charging apparatus 12 includes the second resonance coil 31 for receiving the AC power transmitted from the first resonance coil 24, the coupling distributor 32 for distributing the AC power received by the second resonance coil into an AC power of a large power and an AC power of a small power, the rectifier 33 which rectifiers the AC power of the large power outputted from the coupling distributor 32 and generates a DC voltage, and an ASK demodulator (demodulating section) 34 which is driven by the power outputted from the rectifier 33 and demodulates the AC power of the small power outputted from the coupling distributor 32 to thereby extract a control signal. Further, the charging apparatus 12 includes the battery 35 for supplying electric power to the vehicle driving motor 44 for driving the vehicle (see Fig. 1). The battery 35 is charged by the DC power outputted from the rectifier 33.

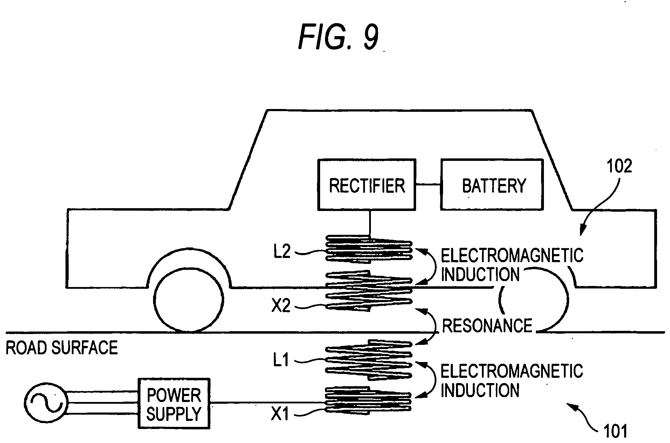

Next, the explanation will be made as to the resonant power transmission method. Fig. 9 is a diagram for explaining the principle of the resonant power transmission method. As shown in this figure, a feeding side circuit 101 is provided with a primary coil L1 and a primary antenna X1 disposed in the vicinity of the primary coil L1. A vehicle side circuit 102 is provided with a secondary coil L2 and a secondary antenna X2 disposed in the vicinity of the secondary coil L2.

When a primary current is flows through the primary coil L1, an induction current flows through the primary antenna X1 due to the electromagnetic induction. Further, the primary antenna X1 resonates at a resonance frequency ωs (= 1/ √Ls·Cs) according to the inductance Ls and the stray capacitance Cs of the primary antenna X1. Then, the secondary antenna X2 provided in the vicinity of the primary antenna X1 at the resonance frequency ωs, whereby a secondary current flows through the secondary antenna X2. Further, the secondary current flows through the secondary coil L2 disposed in the vicinity of the secondary antenna X2 due to the electromagnetic induction.

According to the aforesaid operation, electric power can be supplied in the non-contact manner to the vehicle side circuit 102 from the feeding side circuit 101.

Next, the explanation will be made as to the operation of the wireless charging system for a vehicle shown in Figs. 1 and 2. As shown in Fig. 1, when the electric car 5 is located at the predetermined position of the feeding apparatus 11 where the first resonance coil 24 provided at the feeding apparatus 11 opposes to the second resonance coil 31 provided at the charging apparatus 12 of the electric car 5, the battery 35 can be charged.

When the charging is started, the AC power having the frequency almost in the range of 1 to 100 [MHz] is outputted from the carrier oscillator 21 shown in Fig. 2. The AC power is supplied to the ASK modulator 22, whereby the control signal to be transmitted to the charging apparatus 12 from the feeding apparatus 11 is superimposed on the AC power according to the ASK modulation method. That is, the AC power is used as the carrier signal.

The AC power outputted from the ASK modulator 22 is amplified by the power amplifier 23. The amplified AC power is transmitted to the charging apparatus 12 via the first resonance coil 24 and the second resonance coil 31 according to the aforesaid principle of the resonant power transmission.

The AC power transmitted to the charging apparatus 12 is supplied to the coupling distributor 32. The coupling distributor 32 distributes the inputted AC power into the AC power of the large power and the AC power of the small power, and outputs the AC power of the large power to the rectifier 33. On the other hand, the coupling distributor outputs the AC power of the small power to the ASK demodulator 34.

The rectifier 33 rectifies the AC power of the large power to convert into the DC power of a predetermined voltage and supplies this DC power to the battery 35 to thereby charge the battery 35. Thus, the battery 35 can be charged. Further, the DC power outputted from the rectifier 33 is supplied to the ASK demodulator 34 as electric power for driving the ASK demodulator 34.

The ASK demodulator 34 demodulates the AC power of the small power according to the ASK demodulation to extract the control signal superimposed on the AC power of the small power. Thus, the charging apparatus 12 can receive the control signal transmitted from the feeding apparatus 11.

In this manner, according to the wireless charging system for a vehicle according to the first embodiment of the invention, the AC power outputted from the carrier oscillator 21 is amplified and further the AC power thus amplified is transmitted to the charging apparatus 12 by using the resonant power transmission method to thereby charge the battery 35. Thus, since the battery of the electric car 5 can be charged without coupling the feeding apparatus 11 and the charging apparatus 12 via a plug etc., the charging operation can be performed easily.

Further, the control signal is superimposed on the AC power by using the modulation method such as the ASK modulation in the feeding apparatus 11, and the AC power transmitted from the charging apparatus is demodulated in the charging apparatus 12 to extract the control signal superimposed on the AC power. Thus, the control signal can be transmitted to the electric car 5 from the feeding apparatus 11 without separately providing a communication apparatus between the feeding apparatus 11 and the charging apparatus 12. As a result, the system can be miniaturized and simplified.

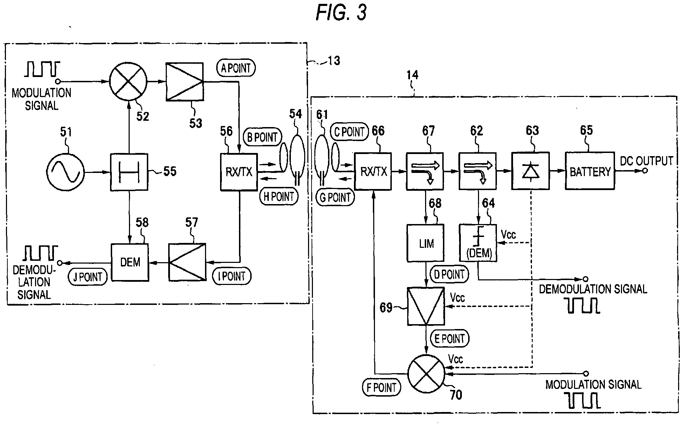

Next, the explanation will be made as to the second embodiment of the invention. Fig. 3 is a block diagram showing the configuration of the wireless charging system for a vehicle. The wireless charging system this vehicle differs from the aforesaid in a point that both the data transmission to a charging apparatus 14 from a feeding apparatus 13 and the data transmission to the feeding apparatus 13 from the charging apparatus 14 is performed each by using the AC power as a carrier.

As shown in Fig. 3, the wireless charging system for a vehicle includes the feeding apparatus 13 and the charging apparatus 14.

The feeding apparatus 13 includes a carrier oscillator 51 for outputting an AC power, a hybrid distributor 55 for distributing the AC power outputted from the carrier oscillator 51 into two AC powers, an ASK modulator 52 for superimposing a control signal on one of the two AC powers distributed by the hybrid distributor 55 according to a modulation method such as the ASK modulation, a power amplifier 53 for amplifying the AC power modulated by the ASK modulator 52, and a first resonance coil 54 for outputting the AC power amplified by the power amplifier 53.

Further, the feeding apparatus is provided, between the power amplifier 53 and the first resonance coil 54, with a transmission/reception selection switch 56 for switching between the transmission and the reception. Furthermore, the feeding apparatus is provided with a power amplifier 57 for amplifying a carrier signal received via the transmission/reception selection switch 56 and an ASK demodulator (DEM) 58 for demodulating the carrier signal amplified by the power amplifier 57 and extracting the control signal. The ASK demodulator (DEM) 58 is supplied with an AC power outputted from the hybrid distributor 55.

The carrier oscillator 51 outputs the AC power having the frequency in the range of 1 to 100 [MHz], for example, as an AC signal for power transmission.

The ASK modulator 52 modulates the AC power as the carrier signal according to the ASK (Amplitude Shift Keying) method. In place of the ASK, one of the modulation methods such as AM (Amplitude Modulation), FM (Frequency Modulation), FSK (Frequency Shift Keying), PSK (Phase Shift Keying), OFDM (Orthogonal frequency division multiplex) and SS (Spread Spectrum) may be applied.

The power amplifier 53 amplifies the AC power outputted from the ASK modulator 52 and outputs the amplified AC power to the first resonance coil 54. The first resonance coil 54 transmits the AC power to a second resonance coil 61 in a non-contact manner by the aforesaid resonant power transmission method in cooperation with the second resonance coil 61 provided at the charging apparatus 14.

The transmission/reception selection switch 56 controls so as to switch between a transmission mode for transmitting the electric power and the control signal to the charging apparatus 14 and a reception mode for receiving the control signal transmitted from the charging apparatus 14. That is, the AC power is transmitted from the first resonance coil 54 when the transmission mode is selected, whilst the AC power transmitted from the second resonance coil 61 is received via the first resonance coil 54 when the reception mode is selected.

The power amplifier 57 amplifies the received carrier signal and outputs to the ASK demodulator (DEM) 58. The ASK demodulator (DEM) 58 demodulates the received signal and extracts the control signal.

On the other hand, the charging apparatus 14 includes the second resonance coil 61for receiving the AC power transmitted from the first resonance coil 54, two coupling distributors 67, 62 each for distributing the AC power received by the second resonance coil into an AC power of a large power and an AC power of a small power, a limiter (LIM) 68 for limiting the amplitude of the AC power of the small power outputted from the coupling distributor 67 to obtain the AC power of an almost constant amplitude, and a power amplifier 69 for amplifying the AC power outputted from the limiter (LIM) 68.

Further, the charging apparatus includes an ASK demodulator (DEM) 64 for demodulating the AC power of the small power outputted from the coupling distributor 62 and extracting the control signal, and a rectifier 63 for rectifying the AC power of the large power outputted from the coupling distributor 62 to generate a DC voltage. Each of the ASK demodulator (DEM) 64 and the power amplifier 69 is supplied with and driven by the electric power outputted from the rectifier 63. Furthermore, the charging apparatus includes a battery 65 for supplying electric power to a vehicle driving motor 44 for driving the vehicle (see Fig. 1). The battery 65 is charged by the DC power outputted from the rectifier 63.

Furthermore, the charging apparatus includes an ASK modulator 70. The ASK modulator 70 employs the AC power outputted from the power amplifier 69 as a carrier signal and modulates the control signal according to the ASK modulation method to thereby superimpose the control signal on the carrier signal. The output terminal of the ASK modulator 70 is coupled to a reception/transmission selection switch 66. The ASK modulator 70 is supplied with and driven by the electric power outputted from the rectifier 63.

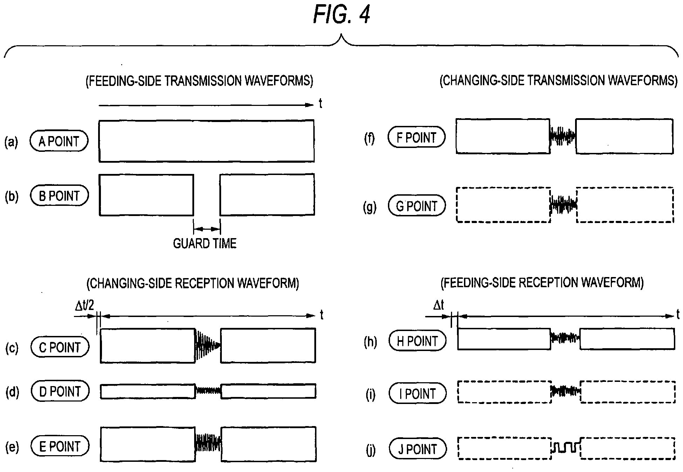

Next, the explanation will be made as to the operation of the wireless charging system for a vehicle shown in Fig. 3 with reference to waveform diagrams shown in Fig. 4. In order to simplify the explanation, each of quadrangles each formed by a surrounded steady line represents that a waveform of the same frequency and the same amplitude continues and each of quadrangles each formed by a surrounded dotted line represents that no waveform is generated.

Fig. 4(a) shows the waveform of the AC power at a point A in Fig. 3 which has constant amplitude. In this case, like the aforesaid first embodiment, this waveform is modulated at the time of transmitting the control signal to the charging apparatus 14 from the feeding apparatus 13.

Fig. 4(b) shows the waveform of the AC power at a point B as the output terminal of the transmission/reception selection switch 56, wherein the signal at the point A is outputted as it is when the transmission/reception selection switch 56 is switched to the transmission mode. In contrast, when the switch is switched to the reception mode, the AC power is not outputted during this time period (this time period s called a guard time).

Fig. 4(c) shows the waveform of the AC power at a point C as the input side of the reception/transmission selection switch 66 of the charging apparatus 14. As shown in this figure, the waveform of the AC power which amplitude attenuates gradually is obtained during the guard time. Fig. 4(d) shows the waveform of the AC power at a point D as the output terminal of the limiter (LM) 68. As shown in this figure, the waveform of the AC power having low constant amplitude is obtained during the guard time.

Fig. 4(e) shows the waveform of the AC power at a point E as the output terminal of the power amplifier 69. This waveform is obtained by amplifying the AC power outputted from the limiter (LM) 68. This AC power is used as the carrier signal at the time of transmitting the control signal to the feeding apparatus 13 from the charging apparatus 14.

Fig. 4(f) shows the waveform of the AC power at a point F as the output terminal of the ASK modulator 70. This waveform represents a signal obtained by subjecting the carrier signal to the ASK modulation. Fig. 4(g) shows the waveform of the AC power at a point G as the output terminal of the reception/transmission selection switch 66, wherein all the signals except for the signal during the guard time are removed.

Fig. 4(h) shows the waveform of the AC power at a point H as the input terminal of the transmission/reception selection switch 56, wherein the modulation signal is generated during the guard time (actually, there is a time delay Δt corresponding to the reciprocal communication).

Fig. 4(i) shows the waveform of the AC power at a point I as the output terminal of the transmission/reception selection switch 56, wherein all the AC power except for the signal during the guard time is removed. Fig. 4(j) shows the waveform of the AC power at a point J as the output terminal of the ASK demodulator (DEM) 58. As shown in this figure, the control signal transmitted from the charging apparatus 14 side is obtained.

In this manner, according to the wireless charging system for a vehicle, the feeding apparatus 13 is provided with the transmission/reception selection switch 56 and the charging apparatus 14 is provided with the reception/transmission selection switch 66. Further, the guard time is provided at a part of the time period for transmitting the AC power to the charging apparatus 14 from the feeding apparatus 13, whereby the control signal is transmitted to the feeding apparatus 13 from the charging apparatus 14 during the guard time.

Thus, not only the AC power is transmitted by using the first resonance coil 54 and the second resonance coil 61 but also the transmission of the control signal to the charging apparatus 14 from the feeding apparatus 13 and the transmission of the control signal to the feeding apparatus 13 from the charging apparatus 14 can be realized by using these coils 54, 61. As a result, it becomes possible to communicate bidirectionally between the feeding apparatus 13 and the electric car 5 without separately providing any communication apparatus between the feeding apparatus 13 and the charging apparatus 14. Accordingly, the system can be downsized and simplified. Further, in the charging apparatus 14, since the control signal is superimposed by using the AC power which is attenuated during the guard time, it is not necessary to separately provide an oscillator for outputting the carrier signal.

Next, the explanation will be made as to a further example. The wireless charging system for this vehicle is the same in a point that the control signal is transmitted to the charging apparatus from the feeding apparatus by using the two resonant coils for the electric power transmission. Additionally, this transmits the control signal to the charging apparatus from the feeding apparatus by using a dedicated communication line.

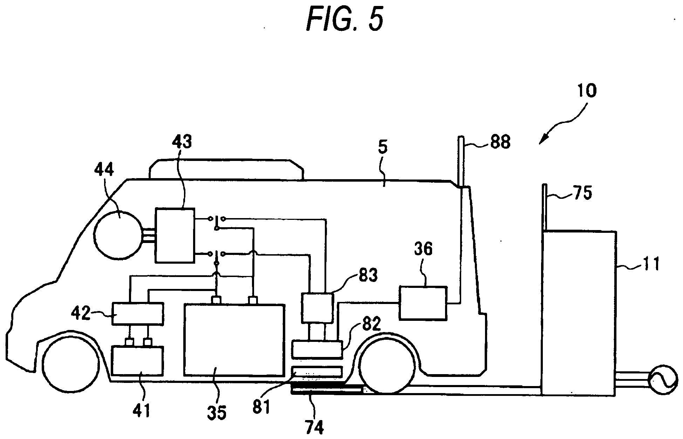

Fig. 5 is a diagram for explaining the configuration of the wireless charging system for a vehicle. As shown in this figure, the wireless charging system for this vehicle differs from Fig. 1 in a point that a transmission portion 36 and antennas 88, 75 are provided in order to transmit the control signal to the feeding apparatus 11 from the electric car 5. The remaining configuration of this embodiment is same as Fig. 1 and hence the explanation thereof will be omitted.

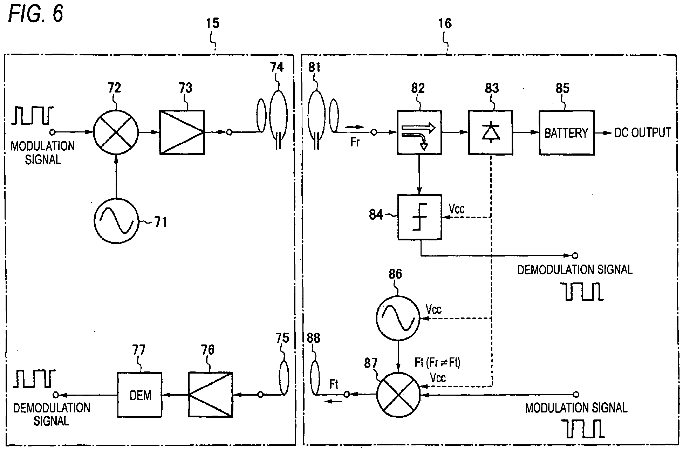

Fig. 6 is a block diagram showing the configuration of the wireless charging system for a vehicle according to the third embodiment. As shown in this figure, a feeding apparatus 15 includes a carrier oscillator 71 for outputting a carrier signal for power transmission, an ASK modulator 72 for superimposing a control signal on the carrier signal outputted from the carrier oscillator 71 according to the modulation method such as the ASK modulation, a power amplifier 73 for amplifying the AC power thus modulated by the ASK modulator 72, and a first resonance coil 74 for outputting the AC power thus amplified by the power amplifier 73.

The carrier oscillator 71 outputs the AC power having the frequency in a range of 1 to 100 [MHz], for example, as an AC signal for power transmission.

The ASK modulator 72 modulates the AC power as the carrier signal according to the ASK (Amplitude Shift Keying) method. Although this embodiment is explained as to an example where the ASK method is employed as the modulation method, in place of the ASK, one of the modulation methods such as AM (Amplitude Modulation), FM (Frequency Modulation), FSK (Frequency Shift Keying), PSK (Phase Shift Keying), OFDM (Orthogonal frequency division multiplex) and SS (Spread Spectrum) may be applied.

The power amplifier 73 amplifies the AC power outputted from the ASK modulator 72 and outputs the amplified AC power to the first resonance coil 74. The first resonance coil 74 transmits the AC power to a second resonance coil 81 in the non-contact manner by the aforesaid resonant power transmission method in cooperation with the second resonance coil 81 provided at the charging apparatus 16.

The charging apparatus 16 includes the second resonance coil 81 for receiving the AC power transmitted from the first resonance coil 74, a coupling distributor 82 for distributing the AC power received by the second resonance coil 81 into an AC power of a large power and an AC power of a small power, a rectifier 83 which rectifiers the AC power of the large power outputted from the coupling distributor 82 and generates a DC voltage, and an ASK demodulator (DEM) 84 which is driven by the power outputted from the rectifier 83 and demodulates the AC power of the small power to thereby extract the control signal. Further, the charging apparatus includes the battery 85 for supplying electric power to the vehicle driving motor 44 for driving the vehicle (see Fig. 5). The battery 85 is charged by the DC power outputted from the rectifier 83.

Further, the charging apparatus 16 includes an oscillator 86 for outputting a carrier signal having a frequency different from the frequency of the AC power outputted from the carrier oscillator 71, an ASK modulator 87 for modulating the carrier signal according to the ASK modulation method to thereby superimpose a control signal, and the antenna 88 for transmitting the carrier signal thus subjected to the ASK modulation. Each of the oscillator 86 and the ASK modulator 87 is supplied with and driven by the electric power outputted from the rectifier 83.

On the other hand, the feeding apparatus 15 includes the antenna 75 for receiving the carrier signal transmitted from the charging apparatus 16, a power amplifier 76 for amplifying the carrier signal received by the antenna 75, and a demodulator (DEM) 77 for demodulating the output signal from the power amplifier 76 and extracting the control signal.

Next, the explanation will be made as to the operation of the wireless charging system for a vehicle shown in Figs. 5 and 6. As shown in Fig. 5, when the electric car 5 is located at the predetermined position of the feeding apparatus 15 where the first resonance coil 74 provided at the feeding apparatus 15 opposes to the second resonance coil 81 provided at the charging apparatus 16 of the electric car 5, the battery 85 can be charged.

When the charging is started, the AC power having the frequency almost in the range of 1 to 100 [MHz] is outputted from the carrier oscillator 71 shown in Fig. 6. The AC power is supplied to the ASK modulator 72, whereby the control signal to be transmitted to the charging apparatus 16 from the feeding apparatus 15 s superimposed on the AC power according to the ASK modulation method.

The AC power outputted from the ASK modulator 72 is amplified by the power amplifier 73. The amplified AC power is transmitted to the charging apparatus 16 via the first resonance coil 74 and the second resonance coil 81 according to the aforesaid principle of the resonant power transmission.

The AC power transmitted to the charging apparatus 16 is supplied to the coupling distributor 82. The coupling distributor 82 distributes the inputted AC power into the AC power of the large power and the AC power of the small power, and outputs the AC power of the large power to the rectifier 83. On the other hand, the coupling distributor outputs the AC power of the small power to the ASK demodulator (DEM) 84.

The rectifier 83 rectifies the AC power of the large power to convert into the DC power of a predetermined voltage and supplies this DC power to the battery 85 to thereby charge the battery 85. Thus, the battery 85 can be charged. Further, the DC power outputted from the rectifier 83 is supplied to the ASK demodulator (DEM) 84 as electric power for driving the ASK demodulator (DEM) 84 and also supplied to the oscillator 86 as electric power for driving the oscillator 86.

The ASK demodulator (DEM) 84 demodulates the AC power of the small power to extract the control signal superimposed on the AC power of the small power. Thus, the charging apparatus 12 can receive the control signal transmitted from the feeding apparatus 11.

Next, the explanation will be made as to the operation for transmitting the control signal to the feeding apparatus 15 from the charging apparatus 16. The ASK modulator 87 superimposes the control signal on the carrier signal outputted from the oscillator 86 according to the ASK modulation method and transmits the carrier signal from the antenna 88. The carrier signal thus transmitted is received by the antenna 75 of the feeding apparatus 15, then amplified by the power amplifier 76 and demodulated by the demodulator (DEM) 77 to thereby extract the control signal. In this case, since the frequency (Ft) of the carrier signal outputted from the oscillator 86 differs from the frequency (Fr) of the AC power outputted from the carrier oscillator 71, the mutual interference there-between can be avoided.

In this manner, the AC power outputted from the carrier oscillator 71 is amplified and further the AC power thus amplified is transmitted to the charging apparatus 16 by using the resonant power transmission method to thereby charge the battery 85. Thus, since the battery of the electric car 5 can be charged without coupling the feeding apparatus 15 and the charging apparatus 16 via a plug etc., the charging operation can be performed easily.

Further, the control signal is superimposed on the AC power according to the modulation method such as the ASK in the feeding apparatus 15, and the AC power is demodulated to thereby extract the control signal superimposed on the AC power in the charging apparatus 16. Thus, the communication between the apparatus 215 and the electric car 5 can be realized without separately providing a communication apparatus between the feeding apparatus 15 and the charging apparatus 16.

Further, the control signal can be transmitted to the feeding apparatus 15 from the charging apparatus 16 by using the dedicated communication line. In this case, since the communication line is used for the one-way transmission to the feeding apparatus 15 from the charging apparatus 16, it is not necessary to employ the bidirectional communication and hence the system can be miniaturized and simplified.

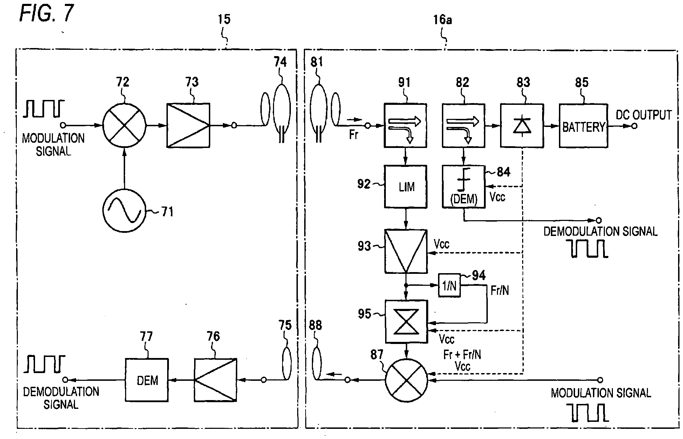

Fig. 7 is a block diagram showing the configuration of the wireless charging system for a vehicle. This differs in a point that a carrier signal is generated by using the AC power transmitted from the feeding apparatus 15 without using the oscillator (see Fig. 6) and the control signal is transmitted to the feeding apparatus 15 from a charging apparatus 16a by using the carrier signal thus generated.

That is, as shown in Fig. 7, the charging apparatus includes a coupling distributor 91 for extracting an AC power of a small power from the AC power received by the second resonance coil 81, a limiter (LIM) 92 for limiting the amplitude of the AC power outputted from the coupling distributor 91 to obtain the AC power of an almost constant amplitude, a power amplifier 93 for amplifying the AC power outputted from the limiter (LIM) 92, a frequency divider 94 for dividing the frequency (Fr) of the AC power amplified by the power amplifier 93 into a frequency of 1/N (N is a natural number) of Fr to obtain the frequency (Fr/N), and a shift unit 95 for shifting the frequency thus divided to obtain the frequency "Fr + (Fr/N)". The AC power outputted from the shift unit 95 is applied to the ASK modulator 87 as a carrier signal and the control signal is superimposed on the carrier signal according to the ASK modulation method. Each of the power amplifier 93, the shift unit 95 and the ASK modulator 87 is supplied with and driven by the electric power outputted from the rectifier 83.

According to such the configuration, the carrier signal for transmitting the control signal to the feeding apparatus 15 from the charging apparatus 16a can be generated without providing an oscillator in the charging apparatus 16a. Further, since the carrier signal thus generated is arranged to have the frequency different from that of the AC power and those frequencies are not in the relation of an integer multiples mutually, the mutual interference there-between can be avoided.

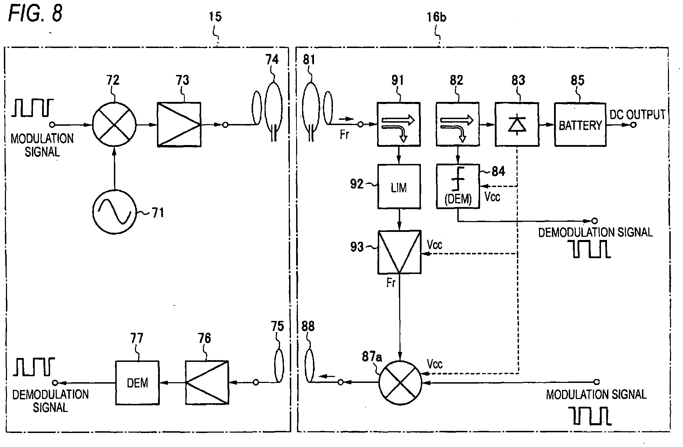

Fig. 8 is a block diagram showing the configuration of the wireless charging system for a vehicle. This also includes the coupling distributor 91, the limiter (LIM) 92 and the power amplifier 93. However, if differs from the example shown in Fig. 7 in a point that this includes an FSK modulator 87a. In the wireless charging system for a vehicle according to this, since the control signal is superimposed on the AC power by using the FSK modulator 87a at the time of transmitting the control signal to the feeding apparatus 15 from a charging apparatus 16b, the frequency of the AC power transmitted to the charging apparatus 16b from the feeding apparatus 15 does not coincide with the frequency of the carrier signal transmitted to the feeding apparatus 15 from the charging apparatus 16b, whereby the mutual interference there-between can be avoided. In this case, a modulator of another frequency-modulation method may be employed in place of the FSK modulator 87a. Each of the power amplifier 93 and the FSK modulator 87a is supplied with and driven by the electric power outputted from the rectifier 83.

Further, in the charging apparatus 14 shown in Fig.3 when the ASK modulator 70 is replaced by the FSK modulator or a modulator of another frequency-modulation method, the bidirectional communication can be performed between the feeding apparatus 13 and the charging apparatus 14 without providing any of the transmission/reception selection switch 56 and the reception/transmission selection switch 66 and without providing the guard time for stopping the AC power.

As described above, although the wireless charging system for a vehicle of the invention is explained based on the embodiment shown in the figures, the invention is not limited thereto but defined by the appended claims.

### <Industrial Applicability>

This invention is quite usable in the case of charging the battery of an electric car in the non-contact manner by the electric power outputted from the feeding apparatus and communicating the control signal.

### <Explanation of symbols>

- 5: electric car (vehicle)
- 11, 13, 15: feeding apparatus
- 12., 14, 16, 16a, 16b: charging apparatus
- 21: carrier oscillator (electric power output section)
- 22: ASK modulator (modulation section)
- 23: power amplifier (electric power amplifying section)
- 24: first resonance coil (first communication terminal)
- 31: second resonance coil (second communication terminal)
- 32: coupling distributor (distributing section)
- 33: rectifier (rectifying section)
- 34: ASK demodulator (demodulation section)
- 35: battery
- 36: transmission portion
- 41: sub-battery
- 42: DC/DC converter
- 43: inverter
- 44: motor
- 51: carrier oscillator
- 52: ASK modulator
- 53: power amplifier
- 54: first resonance coil
- 55: hybrid distributor
- 56: transmission/reception selection switch
- 57: power amplifier
- 58: ASK demodulator (DEM)
- 61: second resonance coil
- 62: coupling distributor
- 63: rectifier
- 64: ASK demodulator (DEM)
- 65: battery
- 66: reception/transmission selection switch
- 67: coupling distributor
- 68: limiter (LIM)
- 69: power amplifier
- 70: ASK modulator
- 71: carrier oscillator
- 72: ASK modulator
- 73: power amplifier
- 74: first resonance coil
- 75: antenna (feeding side reception section)
- 76: power amplifier
- 77: demodulator (DEM)
- 81: second resonance coil
- 82: coupling distributor
- 83: rectifier
- 84: ASK demodulator (DEM)
- 85: battery
- 86: oscillator
- 87: ASK modulator
- 87a: FSK modulator
- 88: antenna (vehicle side reception section)
- 91: coupling distributor
- 92: limiter (LIM)
- 93: power amplifier
- 94: frequency divider
- 95: shift unit

## Claims

1. A wireless charging system for a vehicle (5) which transmits electric power outputted from a feeding apparatus (13) to a vehicle side in a non-contact manner to thereby charge a battery (65) mounted on the vehicle (5), wherein the feeding apparatus (13) includes:
an electric power output section (51) which outputs AC power;
a modulation section (52) which superimposes a control signal (A; K) on the AC power outputted from the electric power output section (51) by using a predetermined modulation method;
an electric power amplifying section (53) which amplifies the AC power modulated by the modulation section (52); and
a first communication terminal (54) which transmits the AC power amplified by the electric power amplifying section (53), and wherein the vehicle (5) includes:
a second communication terminal (61) which receives the AC power transmitted from the first communication terminal (54); a demodulation section (64) which demodulates the AC power received by the second communication terminal (61) to thereby extract the control signal; and
a rectifying section (63) which rectifies the AC power and supplies a DC power obtained by rectifying the AC power to the battery (65), **characterised in**:
the first communication terminal (54) has a transmission/reception function for transmitting the AC power and receiving the signal transmitted from the second communication terminal (61) the second communication terminal (61) has transmission/reception function for receiving the AC power and transmitting the signal to the first communication terminal (54), the feeding apparatus (13) includes a transmission/reception switch section (56) for switching the first communication terminal (54) in a transmission mode or a reception mode,
the vehicle (5) includes a reception/transmission switch section (66) for switching the second communication terminal (61) in a reception mode or a transmission mode,
in a case of transmitting the AC power to the second communication terminal (61) from the first communication terminal (54), the transmission/reception switch section (56) is set to the transmission mode and the reception/transmission switch section (66) is set to the reception mode,
in a case of transmitting the signal to the first communication terminal (54) from the second communication terminal (61), the transmission/reception switch section (56) is set to the reception mode where the AC power is not outputted during this time period and the reception/transmission switch section (66) is set to the transmission mode, and the second communication terminal (61) transmits the control signal by using an attenuated signal of the AC power as a carrier.

2. The wireless charging system for a vehicle (5) according to claim 1, wherein the vehicle (5) includes a distributing section (62) which distributes the AC power received by the second communication terminal (61) into an AC power of a large power and an AC power of a small power,
the demodulation section (64) extracts the control signal from the AC power of the small power, and the rectifying section (63) rectifies the AC power of the large power.

3. The wireless charging system for a vehicle (5) according to claim 2, wherein the DC power (J; M) obtained by rectifying the AC power of the large power is used as electric power (Vcc) for driving the demodulation section (64).

4. The wireless charging system for a vehicle (5) according to any one of claims 1 to wherein the transmission/reception switch section (56) of the first communication terminal (54) switches to the transmission mode or the reception mode so that the AC power transmitted from the first communication terminal (54) includes a guard time (O) which does not have an AC power component; and
wherein the second communication terminal (61) transmits to the first communication terminal (54) the control signal by using an attenuated signal corresponding to the guard time (O) of the AC power received by the second communication terminal (61) as a carrier.

## Patentansprüche

1. Drahtloses Ladesystem für ein Fahrzeug (5), das elektrischen Strom, der von einer Zufuhrvorrichtung (13) ausgegeben wird, auf kontaktlose Weise zu einer Fahrzeugseite überträgt, um dadurch eine Batterie (65) zu laden, die in dem Fahrzeug (5) montiert ist, wobei die Zufuhrvorrichtung (13) beinhaltet:
einen elektrischen Stromausgabeabschnitt (51), der Wechselstrom ausgibt;
einen Modulationsabschnitt (52), der ein Steuersignal (A; K) auf den von dem elektrischen Stromausgabeabschnitt (51) ausgegebenen Wechselstrom unter Verwendung eines vorgegebenen Modulationsverfahrens auflagert;
einen elektrischen Stromverstärkungsabschnitt (53), der den von Demodulationsabschnitt (52) modulierten Wechselstrom verstärkt; und
ein erstes Kommunikationsendgerät (54), das den von dem elektrischen Stromverstärkungsabschnitt (53) verstärkten Wechselstrom überträgt, und wobei das Fahrzeug (5) beinhaltet:
ein zweites Kommunikationsendgerät (61), das den von dem ersten Kommunikationsendgerät (54) übertragenen Wechselstrom empfängt;
einen Demodulationsabschnitt (64), der den von dem zweiten Kommunikationsendgerät (61) empfangenen Wechselstrom demoduliert, um dadurch das Steuersignal zu extrahieren; und
einen Gleichrichtungsabschnitt (63), der den Wechselstrom gleichrichtet und einen durch das Gleichrichten des Wechselstroms erhaltenen Gleichstrom an die Batterie (65) liefert, **dadurch gekennzeichnet, dass**
das erste Kommunikationsendgerät (54) eine Sende-/Empfangsfunktion zum Senden des Wechselstroms und Empfangen des Signals aufweist, das von dem zweiten Kommunikationsendgerät (61) übertragen wird,
das zweite Kommunikationsendgerät (61) eine Sende-/Empfangsfunktion zum Empfangen des Wechselstroms und Senden des Signals an das erste Kommunikationsendgerät (54) aufweist,
die Zufuhrvorrichtung (13) einen Sende-/Empfangsschaltungsabschnitt (56) beinhaltet, um das erste Kommunikationsendgerät (54) in einen Sendemodus oder einen Empfangsmodus zu schalten,
das Fahrzeug (5) einen Empfangs-/Sendeschaltungsabschnitt (66) beinhaltet, um das zweite Kommunikationsendgerät (61) in einen Empfangsmodus oder einen Sendemodus zu schalten,
wenn der Wechselstrom an das zweite Kommunikationsendgerät (61) von dem ersten Kommunikationsendgerät (54) gesendet wird, der Sende-/Empfangsschaltungsabschnitt (56) auf den Sendemodus gesetzt wird und der Empfangs-/Sendeschaltungsabschnitt (66) auf den Empfangsmodus gesetzt wird,
wenn das Signal an das erste Kommunikationsendgerät (54) von dem zweiten Kommunikationsendgerät (61) gesendet wird, der Sende-/Empfangsschaltungsabschnitt (56) auf den Empfangsmodus gesetzt wird, wobei der Wechselstrom während dieser Zeitspanne nicht ausgegeben wird, und der Empfangs-/Sendeschaltungsabschnitt (66) auf den Sendemodus gesetzt wird, und das zweite Kommunikationsendgerät (61) das Steuersignal unter Verwendung eines gedämpften Signals des Wechselstroms als Träger sendet.

2. Drahtloses Ladesystem für ein Fahrzeug (5) nach Anspruch 1, wobei das Fahrzeug (5) einen Verteilungsabschnitt (62) beinhaltet, der den von dem zweiten Kommunikationsendgerät (61) empfangenen Wechselstrom in einen Wechselstrom mit großer Leistung und einen Wechselstrom mit kleiner Leistung aufteilt,
wobei der Demodulationsabschnitt (64) das Steuersignal aus dem Wechselstrom mit der kleinen Leistung extrahiert, und der Gleichrichtungsabschnitt (63) den Wechselstrom mit der großen Leistung gleichrichtet.

3. Drahtloses Ladesystem für ein Fahrzeug (5) nach Anspruch 2, wobei der Gleichstrom (J; M), der durch Gleichrichten des Wechselstroms mit der großen Leistung erhalten wird, als elektrischer Strom (Vcc) zum Antreiben des Demodulationsabschnitts (64) verwendet wird.

4. Drahtloses Ladesystem für ein Fahrzeug (5) nach einem der Ansprüche 1 bis 3, wobei der Sende-/Empfangsschaltungsabschnitt (56) des ersten Kommunikationsendgeräts (54) auf den Sendemodus oder den Empfangsmodus schaltet, so dass der von dem ersten Kommunikationsendgerät (54) übertragene Wechselstrom eine Schutzzeit (O) beinhaltet, die keine Wechselstromkomponente enthält; und
wobei das zweite Kommunikationsendgerät (61) das Steuersignal an das erste Kommunikationsendgerät (54) unter Verwendung eines gedämpften Signals entsprechend der Schutzzeit (O) des Wechselstroms, der von dem zweiten Kommunikationsendgerät (61) empfangen wird, als Träger überträgt.

## Revendications

1. Système de charge sans fil pour véhicule (5) qui transmet l'alimentation électrique délivrée en sortie par un appareil d'alimentation (13) à un côté du véhicule d'une manière sans contact, pour ainsi charger une batterie (65) montée sur le véhicule (5), dans lequel l'appareil d'alimentation (13) comprend:
une section de sortie d'alimentation électrique (51) qui délivre en sortie une alimentation en courant alternatif;
une section de modulation (52) qui superpose un signal de commande (A; K) sur l'alimentation de courant alternatif délivrée en sortie par la section de sortie d'alimentation électrique (51) en utilisant un procédé de modulation prédéterminée;
une section d'amplification d'alimentation électrique (53) qui amplifie l'alimentation en courant alternatif modulée par la section de modulation (52); et
un premier terminal de communication (54) qui transmet l'alimentation en courant alternatif amplifiée par la section d'amplification d'alimentation électrique (53), et dans lequel le véhicule (5) comprend:
un second terminal de communication (61) qui reçoit l'alimentation en courant alternatif transmise à partir du premier terminal de communication (54),
une section de démodulation (64) qui démodule l'alimentation en courant alternatif reçue par le second terminal de communication (61) pour extraire ainsi le signal de commande; et
une section de redressement (63) qui rectifie l'alimentation en courant alternatif et fournit une alimentation en courant continu obtenue en rectifiant le courant alternatif à la batterie (65) **caractérisé en ce que**:
le premier terminal de communication (54) a une fonction d'émission/de réception pour transmettre l'alimentation en courant alternatif et recevoir le signal transmis par le second terminal de communication (61),
le second terminal de communication (61) a une fonction d'émission/de réception pour recevoir l'alimentation en courant alternatif et transmettre le signal transmis par le premier terminal de communication (54),
l'appareil d'alimentation (13) comprend une section de commutation d'émission/de réception (56) pour commuter le premier terminal de communication (54) dans un mode d'émission ou un mode de réception,
le véhicule (5) comprend une section de commutation d'émission/de réception (66) pour commuter le second terminal de communication (61) dans un mode de réception ou un mode d'émission,
au cas où l'alimentation en courant alternatif est transmise au second terminal de communication (61) à partir du premier terminal de communication (54), la section de commutation d'émission/de réception (56) est réglée sur le mode de transmission et la section de commutation de réception/d'émission (66) est réglée sur le mode de réception,
au cas où le signal est transmis au premier terminal de communication (54) à partir du second terminal de communication (61), la section de commutation d'émission/de réception (56) est réglée sur le mode de réception, où l'alimentation en courant alternatif n'est pas délivrée en sortie pendant cette période et la section de commutation de réception/d'émission (66) est réglée sur le mode d'émission, et le second terminal de communication (61) transmet le signal de commande en utilisant un signal atténué de l'alimentation en courant alternatif en tant que signal porteur.

2. Système de charge sans fil pour véhicule (5) selon la revendication 1, dans lequel le véhicule (5) comprend une section de distribution (62) qui distribue l'alimentation en courant continu reçue par le second terminal de communication (61) dans une alimentation en courant alternatif de forte puissance et une alimentation en courant alternatif de faible puissance,
la section de démodulation (64) extrait le signal de commande à partir de l'alimentation en courant alternatif de faible puissance, et la section de rectification (63) rectifie l'alimentation en courant alternatif de forte puissance.

3. Système de charge sans fil pour véhicule (5) selon la revendication 2, dans lequel l'alimentation en courant continu (J; M) obtenue en rectifiant l'alimentation en courant alternatif de forte puissance est utilisée comme alimentation électrique (Vcc) pour entraîner la section de démodulation (64).

4. Système de charge sans fil pour véhicule (5) selon l'une quelconque des revendications 1 à 3, où la section de commutation d'émission/de réception (56) du premier terminal de communication (54) passe en mode d'émission ou en mode de réception de sorte que l'alimentation en courant alternatif émise par le premier terminal de communication (54) comprend un temps de garde (O) qui ne contient pas de composant d'alimentation en courant alternatif; et dans lequel le second terminal de communication (61) transmet au premier terminal de communication (54) le signal de commande en utilisant un signal atténué correspondant au temps de garde (O) de l'alimentation en courant alternatif reçue par le second terminal de communication (61) en tant que signal porteur.
